# EUROPEAN PATENT APPLICATION

(11) **EP 0 977 196 A2**
(43) Date of publication of application: **02.02.2000**
(21) Application number: 99305851.0
(22) Date of filing: 23.07.1999
(51) Int. Cl.: G11B 15/665, G11B 15/28

(54) **Tape recording and playback apparatus**

(30) Priority: 29.07.1998 GB 9816398
(71) Applicant: Hewlett-Packard Company, Palo Alto, California 94304 (US)
(72) Inventor: Dillon, Mark, Victoria Park, Bristol BS3 4QG (GB)
(74) Representative: Lawman, Matthew John Mitchell

(57) **Abstract**

Tape recording and playback apparatus (10) utilising magnetic tape as a recording medium and incorporating a tape-driving capstan (12) upon which undesirable deposits of recording medium and/or other debris can build up. The apparatus (10) incorporates an intermittently operated capstan cleaner (20) mounted on a pivotable arm (16). The position of the arm (16) is maintained by a cam (28) in opposition to a spring (24). The cam (28) is normally in a position (Fig 1) that holds the capstan cleaner (20) out of contact with the capstan (12). The cam (28) is coupled to a tape cassette loading/discharging mechanism to be rotated to a position (Fig 2) that allows the spring (24) to pivot the arm (16) to bring the capstan cleaner (20) into contact with the capstan (12) when the tape cassette is being loaded into and/or discharged from the apparatus. Capstan cleaning is entirely automatic, adequately frequent, and cannot interfere with recording/playback operations. Excessive wear of the capstan is avoided since the cleaning contact is intermittent rather than continuous.

## Description

### Technical Field

This invention relates to tape recording and playback apparatus, and relates more particularly but not exclusively to the intermittent cleaning of a tape-driving capstan in such apparatus.

### Background Art

As used below, the term "apparatus" refers to a tape recording and playback apparatus for writing data onto magnetic tape and reading data from magnetic tape, the data being digital data, analogue data, or a mixture of digital and analogue data.

In tape recording and playback apparatus utilising magnetic tape as a recording medium, the linear speed of the tape along the tape path through the recorder during recording or playback is determined by holding the tape against the periphery of a capstan which is rotated at nominally constant rotational speed. The capstan is a cylindrical spindle which may be formed directly on the end of an output shaft of an electric motor of a kind suitable to be driven at a controlled speed. The tape is held against part of the periphery of the capstan by means of a freely rotatable pinch roller whose rotation axis is parallel to the rotation axis of the capstan. The pinch roller is resiliently biased radially towards the capstan by a resilient roller mounting and/or by forming the pinch roller of a resilient material. The magnetic tape is pinched between the capstan and the pinch roller such that rotation of the capstan pulls the magnetic tape through the pinch at a linear velocity equal to the peripheral velocity of the capstan.

The dynamics of tape/capstan interaction depend upon the physical integrity of the capstan surface. Recording medium abraded from the magnetic tape tends to build up on the capstan with increasing use of the capstan, until rings of debris accumulated on the capstan cause undesirable effects, which may include instabilities in the passage of the tape. It has been proposed to keep a capstan of a tape recording and playback apparatus clean by holding a cleaner, such as a scraper, in continuous contact with the capstan, but this has the disadvantage of causing excessive wear of the capstan.

### Disclosure of the Invention

According to a first aspect of the present invention there is provided a method of cleaning a tape-driving capstan in tape recording and playback apparatus utilising magnetic tape as a recording medium, the cleaning method comprising the steps of intermittently applying a capstan-cleaning means to the capstan and of rotating the capstan during the application thereto of the capstan-cleaning means, the method being characterised in that the capstan-cleaning means is applied to the capstan when magnetic tape is loaded into and/or withdrawn from the apparatus prior to and/or following use of the tape for recording and/or playback.

The magnetic tape may be stored in a tape cassette, and the capstan-cleaning means may be applied to the capstan either as the cassette is loaded into the apparatus or as the cassette is withdrawn from the apparatus, or on both such types of occasion.

The capstan-cleaning means may be selected to be a portion of the tape normally never in contact with a recording and/or playback head means of the apparatus. Said portion of the tape may be a leading end portion of the tape, or a leader therefor.

According to a second aspect of the present invention there is provided tape recording and playback apparatus comprising a tape-driving capstan for driving magnetic tape through the apparatus during use thereof, the apparatus further comprising a capstan-cleaning means, and application means for intermittently applying the capstan-cleaning means to the capstan, characterised in that the application means is constructed or adapted to apply the capstan-cleaning means to the capstan upon magnetic tape being loaded into and/or withdrawn from the apparatus.

The magnetic tape may be stored in a tape cassette, and the application means is preferably such as to apply the capstan-cleaning means to the capstan upon the tape cassette being loaded into and/or withdrawn from the apparatus.

The capstan-cleaning means may comprise a cleaning pad, brush or scraper mounted on a movable mounting means, and the application means may comprise a movement control means disposed to control movement of the movable mounting means. Where the magnetic tape is stored in a tape cassette and where the apparatus comprises a cassette loading and/or discharging mechanism for selectively loading/discharging the cassette into/from the apparatus, the movement control means is preferably coupled to the cassette loading and/or discharging mechanism such that the movement control means is controllably moved to bring the cleaning pad, brush or scraper into temporary contact with the tape-driving capstan upon operation of the cassette loading and/or discharging mechanism to load and/or discharge the cassette into/from the apparatus and then effect a brief rotation of the capstan. The movable mounting means preferably comprises a pivotable arm, and the movement control means preferably comprises a rotatable cam coupled to the cassette loading and/or discharging mechanism to be rotated thereby.

The capstan-cleaning means may alternatively comprise a portion of the tape normally never in contact with a recording and/or playback head means of the apparatus. Said portion of the tape may be a leading portion of the magnetic tape, or a leader therefor.

According to third aspect of the present invention there is provided a method of removing debris from a tape-driving capstan subsequent to a capstan-cleaning operation performed by the method according to the first aspect of the present invention, the debris-removing method being characterised in that it comprises the steps of inserting a tape-holding cassette into the tape recording and playback apparatus, re-winding the tape to the physical beginning of the tape (if not already thereat) and then temporarily locking the tape against motion, and rotating the capstan while the capstan is in contact with the beginning of the tape to remove debris from the capstan whereby such debris as is deposited on the beginning of the tape is deposited on a portion of the tape which will normally never be used for recording.

According to fourth aspect of the present invention there is provided a method of cleaning a capstan in tape recording and playback apparatus utilising magnetic tape as a recording medium, the magnetic tape being held in a cassette, the cleaning method being characterised in that it comprises the steps of inserting the tape-holding cassette into the apparatus, re-winding the tape to the physical beginning of the tape (if not already thereat) and then locking the tape against motion, and rotating the capstan while the capstan is in contact with the beginning of the tape whereby to remove debris from the capstan.

### Brief Description of the Drawings

Embodiments of the invention will now be described by way of example with reference to the accompanying drawings wherein:
Fig 1 is a plan view of the chassis of tape recording and playback apparatus having a capstan-cleaning assembly mounted thereon but disengaged from the capstan; and
Fig 2 corresponds to Fig 1 but with the capstan-cleaning assembly engaged with the capstan.

### Best Mode For Carrying Out the Invention, & Industrial Applicability

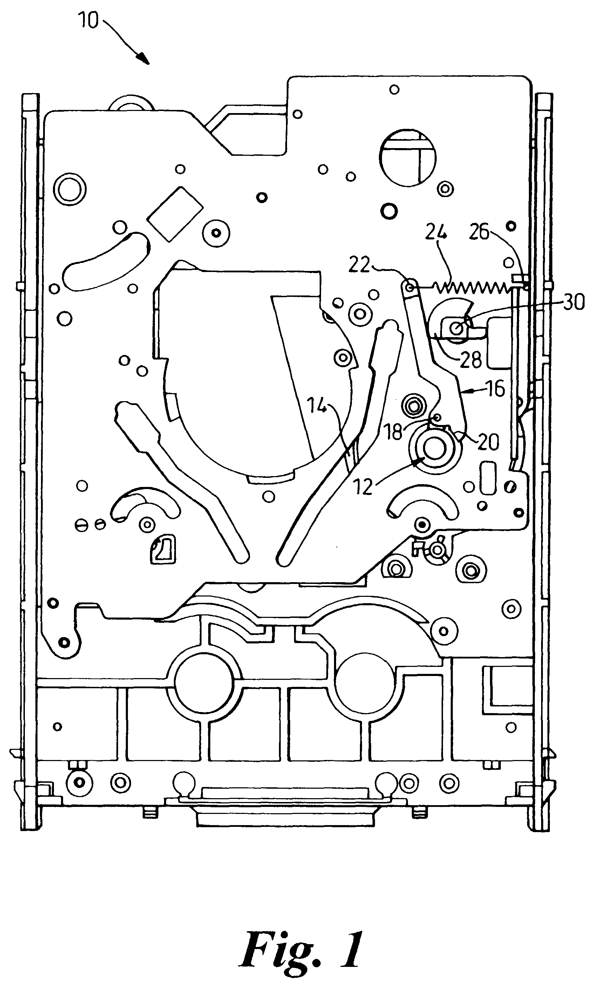

Referring first to Fig 1, tape recording and playback apparatus includes a chassis 10 shown devoid of most other components of the apparatus, but with the capstan 12 fitted and projecting upwards from the chassis 10 (upwards from the plane of Fig 1). The capstan motor 14 is mounted below the chassis 10, and is partly visible through apertures in the chassis 10.

A movable arm 16 is mounted on a pivot 18 adjacent to capstan 12. An end 20 of the arm 16 is formed as a capstan-cleaning pad, brush or scraper. The other end 22 of the arm 16 is pulled by a tension spring 24 such that the arm 16 tends to pivot in a clockwise direction as viewed in Fig 1. The end 26 of the spring 24 remote from the arm end 22 is anchored to the chassis 10.

If the arm 16 were free to rotate under the biasing influence of the spring 24, the arm 16 would pivot clockwise until the arm end 20 was firmly pressed against the periphery of the capstan 12, and the pad, brush or scraper was in capstan-cleaning operation. However, except in certain circumstances (detailed below), the arm 16 is held in the anti-clockwise position shown in Fig 1 by a rotatable cam 28 which is mounted on a pivot 30. The rotational position of the cam 28 about its pivot 30 is controlled by a tape cassette discharging mechanism (not shown) such that the cam 28 is held in its Fig 1 position at all times except when a tape cassette is being discharged from the apparatus.

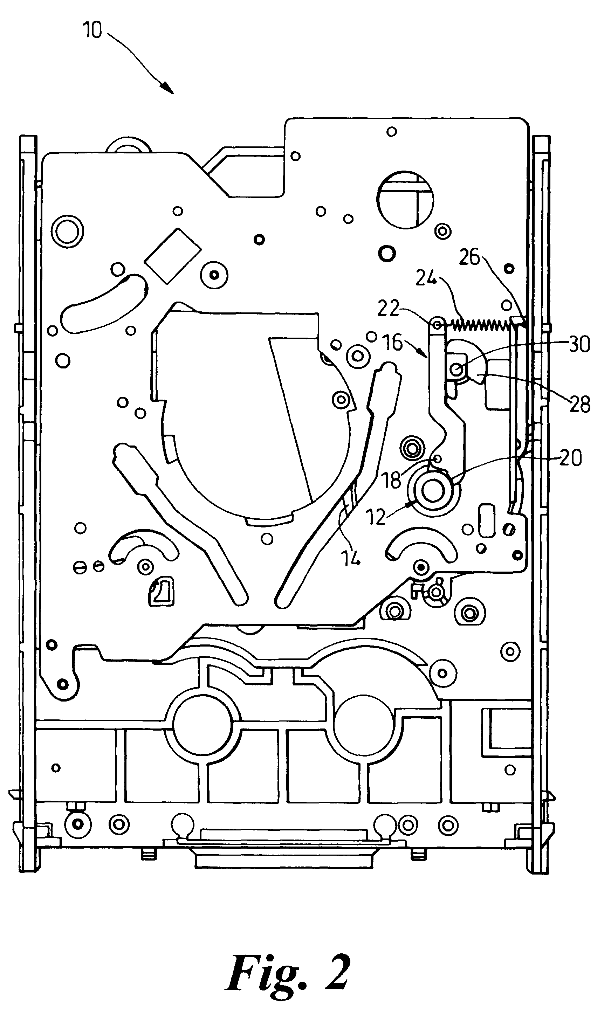

Referring now to Fig 2, this shows the rotational position of the cam 28 (distinct from the Fig 1 position) during discharge of a tape cassette (not shown) from the apparatus. At the start of the unloading cycle, the temporarily modified aspect of the cam 28 with respect to the arm 16 allows the tension spring 26 to resiliently bias the arm 16 to pivot clockwise (as viewed in Fig 2) from the previously maintained position (as shown in Fig 1).

The pad, brush or scraper formed or mounted on the end 20 of the arm 16 is pressed against the capstan 12, which is then rotated at a suitable speed by appropriate energisation of the capstan motor 14. The combination of contact with, and rotation of, the capstan 12 results in the arm end 20 removing whatever deposits may have accumulated on the capstan 12 since the last cleaning procedure.

After a predetermined period, as determined by the conclusion of cassette discharge or by a timer (not shown), the cam 28 is caused or allowed to rotate from its Fig 2 position back to its Fig 1 position. This forces the arm 16 to pivot anti-clockwise against the biasing of the spring 24, and lifts the arm end 20 away from its preceding temporary contact with the capstan 12. This terminates the capstan-cleaning cycle.

Capstan cleaning may alternatively or additionally be performed upon loading of the tape cassette into the apparatus, by coupling the cam 28 to a cassette loading mechanism (not shown) which may in practice be the cassette discharging mechanism operated in a reverse direction.

The present invention thus provides effective cleaning of tape-driving capstans in tape recording and playback apparatus and the like, but with a minimum cleaning contact with the capstan that avoids the excessive wear of prior art arrangements which depend on continuous contact. However, since capstan cleaning is initiated by cassette loading and/or discharge, cleaning occurs automatically with adequate frequency (relative to distance of tape travel) but without especially elaborate control or timing mechanisms, and without necessitating the intervention of an operator. Due to its timing, capstan cleaning as performed by the invention cannot interfere with recording or playback.

In testing of the above-described capstan-cleaning method and apparatus, the Applicants have found that the cleaning operation can result in a line of loose magnetic recording media debris being left on the capstan. This was obviously undesirable as this debris would inevitably be transferred onto the magnetic tape which, in turn, would lead to read or write errors. The cause of this problem is that the capstan cleaner (in the form of a scraper) contacts the capstan while the capstan is rotated. Any debris that is initially present on the capstan is scraped off, and this loose debris either drops away from the scraper and capstan, or sits ahead of the scraper. As a consequence, when the scraper is moved out of contact with the capstan, a small amount of debris is left on the capstan in the form of a line of loose debris along the axial length of the capstan surface.

In order to remove this line of debris and thereby clean the capstan in accordance with the invention, a re-wound tape that is inserted after a cleaning operation is re-wound to the physical beginning of the tape, i.e. to the leading end of the magnetic tape or to a magnetically inert leader therefor. (The tape would normally be re-wound to the beginning of the recording medium when inserted into the recording and playback apparatus; in accordance with this embodiment of the invention, the tape is over-re-wound to its physical beginning.) The reel motors are then locked such that no rotation can occur, and the contaminated capstan is rotated. This operation removes the debris from the capstan and deposits it onto the tape by a type of wiping action. The portion of the tape onto which the debris is deposited will normally never be used for writing as it cannot physically reach the write heads or drum; thus the use for debris wiping of the leading end of the tape or of a leader therefor does not jeopardise the heads but nevertheless ensures cleanliness of the capstan as part of the tape-loading operation.

Modifications and variations of the above-described embodiments can be adopted without departing from the scope of the invention as defined in the appended claims.

## Claims

1. A method of cleaning a tape-driving capstan in tape recording and playback apparatus utilising magnetic tape as a recording medium, the cleaning method comprising the steps of intermittently applying a capstan-cleaning means to the capstan and of rotating the capstan during the application thereto of the capstan-cleaning means, the method being characterised in that the capstan-cleaning means is applied to the capstan when magnetic tape is loaded into and/or withdrawn from the apparatus prior to and/or following use of the tape for recording and/or playback.

2. A method as claimed in Claim 1 wherein the magnetic tape is stored in a tape cassette, characterised in that the capstan-cleaning means is applied to the capstan as the cassette is withdrawn from the apparatus.

3. A method as claimed in Claim 1 wherein the magnetic tape is stored in a tape cassette, characterised in that the capstan-cleaning means is applied to the capstan as the cassette is loaded into the apparatus.

4. A method as claimed in any preceding Claim, characterised in that the capstan-cleaning means is selected to be a cleaning pad, brush or scraper.

5. A method as claimed in Claim 1, characterised in that the capstan-cleaning means is selected to be a portion of the tape normally never in contact with a recording and/or playback head means of the apparatus.

6. A method as claimed in Claim 5, characterised in that said portion of the tape is a leading end portion of the magnetic tape, or a leader therefor.

7. Tape recording and playback apparatus comprising a tape-driving capstan (12) for driving magnetic tape through the apparatus during use thereof, the apparatus further comprising a capstan-cleaning means (20), and application means (16, 24) for intermittently applying the capstan-cleaning means (20) to the capstan (12), characterised in that the application means (16, 24) is constructed or adapted (28) to apply the capstan-cleaning means (20) to the capstan (12) upon magnetic tape being loaded into and/or withdrawn from the apparatus.

8. Apparatus as claimed in Claim 7 wherein the magnetic tape is stored in a tape cassette, characterised in that the application means (16, 24) is constructed or adapted (28) to apply the capstan-cleaning means (20) to the capstan (12) upon the tape cassette being loaded into and/or withdrawn from the apparatus.

9. Apparatus as claimed in Claim 7 or in Claim 8 characterised in that the capstan-cleaning means (20) comprises a cleaning pad, brush or scraper mounted on a movable mounting means (16), and the application means comprises a movement control means (24, 28) disposed to control movement of the movable mounting means.

10. Apparatus as claimed in Claim 8 or in Claim 9 as dependent on Claim 8, the apparatus comprising a cassette discharging mechanism for selectively discharging the cassette from the apparatus, characterised in that the movement control means (28) is controllably moved to bring the capstan-cleaning means (20) into temporary contact with the tape-driving capstan (12) upon operation of the cassette discharging mechanism to discharge the cassette from the apparatus.

11. Apparatus as claimed in Claim 8 or in Claim 9 as dependent on Claim 8, or as claimed in Claim 10, the apparatus comprising a cassette loading mechanism for selectively loading the cassette into the apparatus, characterised in that the movement control means (28) is controllably moved to bring the capstan-cleaning means (20) into temporary contact with the tape-driving capstan (12) upon operation of the cassette loading mechanism to load the cassette into the tape recorder.

12. Apparatus as claimed in Claim 9 or in Claim 10 as dependent on Claim 9, or as claimed in Claim 11 as dependent on Claim 9 or Claim 10, characterised in that the movable mounting means (16) comprises a pivotable arm.

13. Apparatus as claimed in Claim 10 or in Claim 11, or in Claim 12 as dependent on Claim 10 or on Claim 11, characterised in that the movement control means (28) comprises a rotatable cam coupled to the cassette loading and/or discharging mechanism to be rotated thereby.

14. Apparatus as claimed in Claim 7 or Claim 8, characterised in that the capstan-cleaning means comprises a portion of the tape normally never in contact with a recording and/or playback head means of the apparatus.

15. Apparatus as claimed in Claim 14 characterised in that said portion of the tape is a leading end portion of the magnetic tape, or a leader therefor.

16. A method of removing debris from a tape-driving capstan subsequent to a capstan-cleaning operation performed by the method as claimed in any of claims 1 to 6, the debris-removing method being characterised in that it comprises the steps of inserting a tape-holding cassette into the tape recording and playback apparatus, re-winding the tape to the physical beginning of the tape (if not already thereat) and then locking the tape against motion, and rotating the capstan while the capstan is in contact with the beginning of the tape to remove debris from the capstan whereby such debris as is deposited on the beginning of the tape is deposited on a portion of the tape which will normally never be used for recording.

17. A method of cleaning a tape-driving capstan in tape recording and playback apparatus utilising magnetic tape as a recording medium, the magnetic tape being held in a cassette, the cleaning method being characterised in that it comprises the steps of inserting the tape-holding cassette into the apparatus, re-winding the tape to the physical beginning of the tape (if not already thereat) and then locking the tape against motion, and rotating the capstan while the capstan is in contact with the beginning of the tape whereby to remove debris from the capstan.
